Europäisches Patentamt

European Patent Office

Office européen des brevets

(19)

(11) **EP 1 170 580 A1**

(12) **DEMANDE DE BREVET EUROPEEN**

(43) Date de publication:
**09.01.2002 Bulletin 2002/02**

(51) Int Cl.⁷: **G01N 1/24**

(21) Numéro de dépôt: **01420151.1**

(22) Date de dépôt: **06.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.07.2000 FR 0008939**

(71) Demandeur: **CONSEILS ETUDES ET RECHERCHES EN GESTION DE L'AIR C.E.R.G.A. F-77600 Bussy Saint Georges (FR)**

(72) Inventeur: **Jardinier, Pierre**
**93460 Gournay sur Marne (FR)**

(74) Mandataire: **Maureau, Philippe et al**
**Cabinet GERMAIN & MAUREAU, 12, rue Boileau, BP 6153**
**69466 Lyon Cedex 06 (FR)**

(54) **Dispositif de collecte pour l'évaluation de la présence de particules, telles que des poussières**

(57)   Ce dispositif comprend un récipient (3) contenant un liquide, dont l'ouverture est obturée par un couvercle (8) dans lequel sont montés un filtre (10) et un mécanisme (13) s'ouvrant lorsque la pression à l'intérieur du récipient est supérieure à la pression atmosphérique, un tuyau (4) débouchant dans le fond du récipient, l'évacuation de l'eau par ce tuyau (4) assurant dans le récipient la formation d'un piston-liquide d'aspiration créant une dépression assurant le passage d'air à travers le filtre (10) avec retenue sur celui-ci des particules contenues dans l'air.

FIG 1

EP 1 170 580 A1

# Description

La présente invention a pour objet un dispositif de collecte d'air pour l'évaluation de la présence de particules, telles que des poussières.

La qualité de l'air, y compris de l'air à l'intérieur des bâtiments, devient une préoccupation grandissante.

Les poussières constituent une composante importante de la qualité de l'air, puisqu'il a été montré que les pollens, les fibres, les acariens, les allergènes d'animaux, les bactéries ou moisissures véhiculés par un support solide, sont nocifs pour la santé.

Il paraît donc nécessaire de mesurer la teneur en poussières des endroits occupés sur les lieux de travail, dans les logements, et plus particulièrement dans les chambres à coucher où l'on séjourne chaque jour en moyenne de sept à dix heures.

Il est possible de considérer que le taux de poussière d'une chambre à coucher dépend :

- des poussières extérieures,
- du mode de ventilation : mécanique, naturel, permanent ou intermittent,
- des revêtements du sol et des murs,
- des condensations sur les vitrages ou autres parois,
- des épurateurs d'air à filtre, électrostatiques,
- de la télévision et des écrans d'ordinateurs,
- de la façon de balayer ou d'aspirer les poussières....

Il est clair que la mesure de la teneur en particules, et notamment en poussières de l'air à chaque instant, permettrait de mieux savoir comment améliorer les différents acteurs concourrant à une bonne qualité de l'air intérieur.

A l'heure actuelle, la collecte des poussières dans les chambres à coucher ne peut être envisagée que si elle est silencieuse. Or, il n'existe pas de méthode permettant de procéder à des analyses silencieuses.

En effet, un prélèvement d'air se fait à partir d'une pompe à vide permettant de collecter, par aspiration, un échantillon afin de le caractériser physiquement et/ou chimiquement. Il est connu de faire une analyse gravimétrique de l'échantillon en procédant à une pesée en laboratoire avant et après le prélèvement et en mesurant l'augmentation de la masse pour déterminer la concentration massique de l'échantillon d'air recueilli.

Il est également courant d'analyser un échantillon par colorimétrie. La comparaison de l'échantillon avec une carte de référence permet d'apprécier la teneur en poussières.

Dans les deux cas, le prélèvement se traduit par un bruit important, et les analyses ponctuelles ne permettent pas de procéder à une étude en continu pour évaluer la survenue d'un événement générateur de particules ou de poussières.

Le but de l'invention est de fournir un dispositif permettant, d'une part, de faire une analyse sans bruit de la qualité de l'air d'une pièce et, d'autre part, de suivre l'évolution de la poussière, dans le temps, à l'intérieur d'une même pièce.

A cet effet, le dispositif qu'elle concerne comprend un récipient contenant un liquide, dont l'ouverture est obturée par un couvercle dans lequel sont montés un filtre et un mécanisme s'ouvrant lorsque la pression à l'intérieur du récipient est supérieure à la pression atmosphérique, un tuyau débouchant dans le fond du récipient, l'évacuation de l'eau par ce tuyau assurant, dans le récipient, la formation d'un piston-liquide d'aspiration créant une dépression assurant le passage d'air à travers le filtre avec retenue sur celui-ci des particules contenues dans l'air. Les particules, telles que poussières, bio-aérosols, sont recueillies sur le filtre. Le liquide utilisé est un liquide à faible tension superficielle, telle que de l'eau, qui joue le rôle d'un piston d'aspiration.

Suivant une forme préférée de réalisation, ce dispositif comprend un second récipient décalé verticalement et vers le bas par rapport au premier récipient et dans lequel l'extrémité inférieure du tuyau débouchant dans le premier récipient est montée sur l'embout de sortie d'une pompe de refoulement.

Lorsque le récipient supérieur est rempli de liquide, la différence de hauteur barométrique entre les niveaux de liquide dans les deux récipients crée une différence de pression assurant le passage de liquide du récipient supérieur vers le récipient inférieur. La nappe de liquide joue le rôle de piston d'aspiration en créant une pression inférieure à la pression atmosphérique. L'air contenu dans la pièce dans laquelle se trouve le dispositif est donc aspiré dans le récipient supérieur à travers le filtre dont est muni le couvercle de ce récipient. Lorsque le piston liquide est arrivé à un point bas, une pompe à eau placée dans le récipient inférieur fait remonter l'eau jusqu'à atteindre un niveau prédéterminé, avant de recommencer un nouveau cycle d'aspiration.

A cet effet, le second récipient ou récipient inférieur contient deux détecteurs de niveau, décalés verticalement, le détecteur haut commandant la mise en fonctionnement de la pompe et le détecteur bas commandant l'arrêt de la pompe.

Suivant une caractéristique de l'invention, ce dispositif comporte un chronomètre dont la mise en fonctionnement et l'arrêt sont commandés respectivement par l'arrêt et la mise en fonctionnement de la pompe de refoulement.

Cette mesure du temps d'aspiration de l'air est importante, car la surface active des pores diminue au cours du temps. Le temps d'aspiration augmente donc jusqu'au moment où la surface active des pores sera tellement faible qu'il conviendra de changer le filtre. Le suivi du temps d'aspiration permet, d'une part, de déterminer le taux de colmatage du filtre et, d'autre part, d'évaluer à tout moment la survenue d'un phénomène poussiéreux ponctuel. Afin de déterminer le moment de la survenue d'un tel phénomène, le dispositif selon l'invention, comporte un calculateur associé à une horloge, mémorisant les durées successives de transfert de liquide du récipient supérieur vers le récipient inférieur, avec indication de l'heure pour chacun de ces transferts.

Afin de créer une dépression d'aspiration plus ou moins importante, il est possible de changer la hauteur barométrique en modifiant la distance verticale entre les deux récipients. A cet effet, la position verticale d'au moins l'un des deux récipients est réglable.

Suivant une forme d'exécution, le mécanisme du couvercle du récipient supérieur s'ouvrant lorsque la pression à l'intérieur du récipient est supérieure à la pression atmosphérique est constitué par une soupape.

Suivant une autre forme d'exécution, le mécanisme du couvercle du récipient supérieur s'ouvrant lorsque la pression à l'intérieur du récipient est supérieure à la pression atmosphérique est constitué par une électrovanne dont le déclenchement, asservi à la pompe de refoulement, est réalisé simultanément ou non à la mise en fonctionnement de cette dernière. La mise en oeuvre d'une électrovanne présente l'avantage, d'une part, de ne pas utiliser la surpression du récipient supérieur comme moyen d'ouverture et, d'autre part, de ne créer qu'une faible surpression, d'autant plus faible que l'on augmente la surface d'ouverture de l'électrovanne.

Avantageusement, et afin de pouvoir poursuivre une mesure lorsqu'un filtre est colmaté, le filtre est monté sur un support motorisé, par exemple à barillet, équipé de plusieurs filtres, permettant un changement automatique de filtre.

Suivant une possibilité, ce dispositif est associé à un détecteur de présence et/ou à un détecteur de dioxyde de carbone $CO_2$. Le détecteur de présence permet de mesurer la quantité de poussière pouvant être ingérée par une personne pendant une durée déterminée, tandis que l'analyseur de dioxyde de carbone permet de mesurer les débits d'air réels et les débits de ventilation qui transitent dans la pièce dans laquelle se trouve le dispositif.

De toute façon, l'invention sera bien comprise à l'aide de la description qui suit, en référence au dessin schématique annexé représentant, à titre d'exemple non limitatif, une forme d'exécution de ce dispositif :

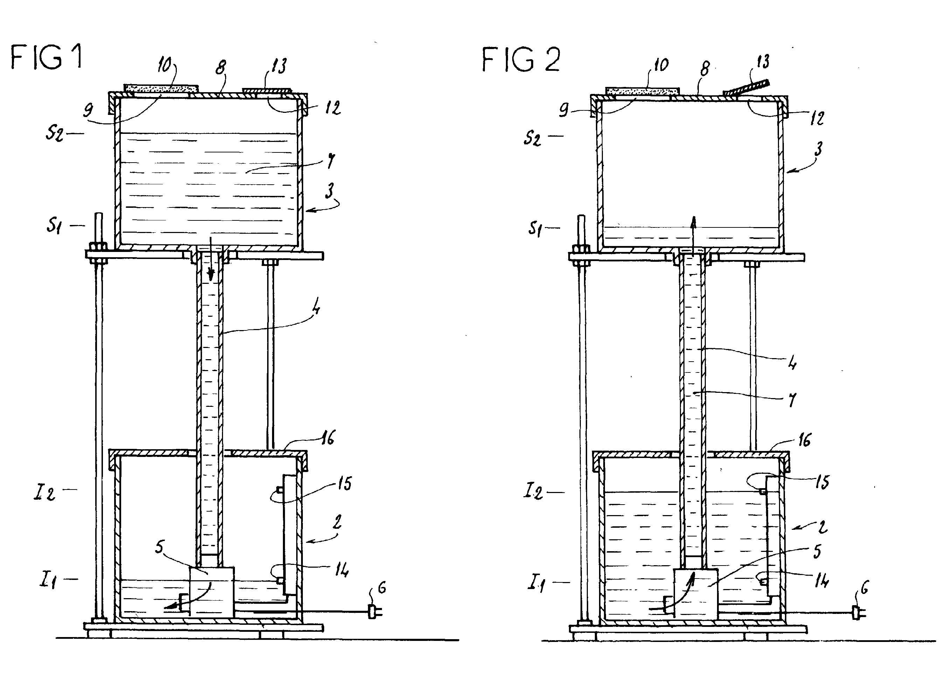

Figures 1 et 2 en sont deux vues en coupe transversale respectivement en position d'aspiration et au début de la phase de remontée du liquide du récipient inférieur vers le récipient supérieur.

Le dispositif selon l'invention comprend un récipient inférieur 2 et un récipient supérieur 3 décalés verticalement, et reliés l'un à l'autre par un tuyau 4 qui débouche dans le fond du récipient supérieur 3, et qui est monté sur l'embout de refoulement d'une pompe 5 électrique, dont l'alimentation est réalisée à l'aide d'une prise 6. La pompe 5 est immergée dans le récipient 2. Un certain volume de liquide 7, à faible tension superficielle, tel que de l'eau, est disposé dans les récipients 2, 3 avec possibilité de passage de l'un à l'autre. Le récipient 3 est obturé de façon étanche par un couvercle 8 présentant deux ouvertures, dont l'une 9 est recouverte par un filtre 10 et dont l'autre 12 est équipée d'une soupape 13 s'ouvrant à l'instant précis où la pompe de refoulement se met en marche. Le récipient inférieur 2 contient deux détecteurs de niveau, un détecteur de niveau bas 14 et un détecteur de niveau haut 15. Ces deux détecteurs correspondent à des niveaux de remplissage I1 et I2 du récipient inférieur. Lorsque le niveau dans le récipient inférieur est au niveau I1, le niveau dans le récipient supérieur 3 est au niveau S2, tandis que le lorsque le niveau de liquide dans le récipient inférieur 2 est au niveau I2, le niveau dans le récipient supérieur est au niveau S1.

Le récipient inférieur 2 est muni d'un couvercle 16, non étanche, mais évitant l'évaporation de liquide.

La figure 1 représente le dispositif en début de période d'aspiration. Le niveau de liquide dans le récipient 2 est au niveau I1, niveau auquel le détecteur 14 a stoppé le fonctionnement de la pompe de refoulement 5. La soupape 13 est en position fermée et un chronomètre est déclenché. Du fait de la pression barométrique, le liquide est transféré du récipient 3 vers le récipient 2, jusqu'à ce que le liquide dans le récipient inférieur 2 atteigne le détecteur de niveau 15. Le chronomètre s'arrête et indique la durée de l'écoulement. Le détecteur 15 provoque la mise en fonctionnement de la pompe 5 qui refoule le liquide dans le récipient 3 jusqu'à ce que le niveau dans le récipient 2 atteigne le détecteur 14. Lors de la remontée de l'eau du récipient 2 vers le récipient 3, la soupape 13 se soulève pour éviter le passage d'air en sens inverse dans le filtre 10.

La perte de charge à travers le tuyau 4 de la pompe 5 doit être négligeable devant la différence de pression entre l'atmosphère et le volume clos du récipient 3, qui est sensiblement égale à la hauteur de la colonne d'eau.

Ainsi, à chaque cycle, le filtre est traversé par une quantité d'air Q égale à la quantité d'eau qui s'est écoulée. Le volume d'eau V correspondant est égal à V = S(S2 - S1) où S est la surface du récipient supérieur 3 et S1 et S2 les niveaux respectivement inférieur et supérieur de l'eau à l'intérieur de ce récipient.

Le seul paramètre utile qui est enregistré est l'écoulement du temps, séquencé par des durées correspondant aux aspirations et aux relevages successifs. A partir de ces deux durées, un traitement informatique permet de déterminer le débit d'air à chaque instant i :

$$q_i = V\!\!\left/\!t_{AI}\right.$$

où $t_{AI}$ est la durée d'aspiration

A partir de la relation débit-pression pour un filtre constitué de pores :

$$q_i = s_i . \Delta P$$

on évalue alors l'évolution de $s_i$ en fonction du temps ou en fonction de la quantité d'air totale qui a traversé le filtre depuis le début du prélèvement :

$$s_i = \frac{q_i}{\Delta P} = \frac{V}{(t_{AI}.\Delta P)}$$

La surface active des pores $s_i$ diminue au cours du temps ; le temps d'aspiration augmente monotonement (au sens mathématique du terme) jusqu'au moment où $s_i$ sera tellement faible qu'il conviendra alors de changer le filtre grâce à un système de changeur de filtres automatisé. L'intérêt de cette fonction, de par ses irrégularités, est de pouvoir évaluer à tout moment la survenue d'un phénomène poussiéreux.

Comme il ressort de ce qui précède, l'invention apporte une grande amélioration à la technique existante, en fournissant un dispositif de mesure de la quantité de poussière présente dans l'air, de conception simple, et ne générant pas de bruit, puisque l'aspiration est réalisée par simple déplacement d'un piston liquide, et que le relevage de liquide est obtenu par une pompe de relevage de fonctionnement très silencieux.

Comme il va de soi, l'invention ne se limite pas à la seule forme d'exécution de ce dispositif, décrite ci-dessus à titre d'exemple, elle en embrasse au contraire toutes les variantes. C'est ainsi notamment que le déplacement du piston liquide en vue de réaliser l'aspiration pourrait être obtenu à l'aide d'une pompe, sans que l'on sorte pour autant du cadre de l'invention.

## Revendications

1. Dispositif de collecte d'air pour l'évaluation de la présence de particules, telles que des poussières, **caractérisé en ce qu'**il comprend un récipient (3) contenant un liquide, dont l'ouverture est obturée par un couvercle (8) dans lequel sont montés un filtre (10) et un mécanisme (13) s'ouvrant lorsque la pression à l'intérieur du récipient est supérieure à la pression atmosphérique, un tuyau (4) débouchant dans le fond du récipient, l'évacuation de l'eau par ce tuyau (4) assurant, dans le récipient, la formation d'un piston-liquide d'aspiration créant une dépression assurant le passage d'air à travers le filtre (10) avec retenue sur celui-ci des particules contenues dans l'air.

2. Dispositif selon la revendication 1, **caractérisé en ce qu'**il comprend un second récipient (2) décalé verticalement et vers le bas par rapport au premier récipient (3) et dans lequel l'extrémité inférieure du tuyau (4) débouchant dans le premier récipient (3) est montée sur l'embout de sortie d'une pompe de refoulement (5).

3. Dispositif selon la revendication 2, **caractérisé en ce que** le second récipient (2) ou récipient inférieur contient deux détecteurs de niveau (14, 15), décalés verticalement, le détecteur haut (15) commandant la mise en fonctionnement de la pompe (5) et le détecteur bas (14) commandant l'arrêt de la pompe (5).

4. Dispositif selon l'une des revendications 2 et 3, **caractérisé en ce qu'**il comporte un chronomètre dont la mise en fonctionnement et l'arrêt sont commandés respectivement par l'arrêt et la mise en fonctionnement de la pompe de refoulement (5).

5. Dispositif selon la revendication 3, **caractérisé en ce qu'**il comporte un calculateur associé à une horloge, mémorisant les durées successives de transfert de liquide du récipient supérieur vers le récipient inférieur, avec indication de l'heure pour chacun de ces transferts.

6. Dispositif selon l'une des revendications 2 à 6, **caractérisé en ce que** la distance verticale entre les deux récipients (2, 3) est réglable.

7. Dispositif selon l'une des revendications 1 à 6, **caractérisé en ce que** le mécanisme du couvercle (8) du récipient supérieur (3) s'ouvrant lorsque la pression à l'intérieur du récipient est supérieure à la pression atmosphérique est constitué par une soupape.

8. Dispositif selon l'une des revendications 1 à 6, **caractérisé en ce que** le mécanisme du couvercle (8) du récipient supérieur (3) s'ouvrant lorsque la pression à l'intérieur du récipient est supérieure à la pression atmosphérique est constitué par une électrovanne dont le déclenchement, asservi à la pompe de refoulement, est réalisé simultanément ou non à la mise en fonctionnement de cette dernière.

9. Dispositif selon l'une des revendications 1 à 8, **caractérisé en ce que** le filtre (10) est monté sur un support motorisé, par exemple à barrillet, équipé de plusieurs filtres, permettant un changement automatique de filtre.

10. Dispositif selon l'une des revendications 1 à 9, **caractérisé en ce qu'**il est associé à un détecteur de présence et/ou à un détecteur de dioxyde de carbone $CO_2$.

FIG 1

FIG 2

**Office européen des brevets**

## RAPPORT DE RECHERCHE EUROPEENNE

Numéro de la demande

EP 01 42 0151

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 632 179 A (LESLIE MINCHIN) 17 novembre 1949 (1949-11-17) * page 1, ligne 27 - page 1, ligne 83 * * page 2, ligne 99 - page 3, ligne 73; figure 1 * | 1,2 | G01N1/24 |
| A | DE 11 33 925 B (CESKOSLOVENSKA AKADEMIE VED, PRAG) 26 juillet 1962 (1962-07-26) * colonne 1, ligne 50 - colonne 3, ligne 8; figure 1 * | 1 | |
| A | US 3 657 920 A (TEEL DALE M ET AL) 25 avril 1972 (1972-04-25) * abrégé; figure 1 * | 1,9 | |
| A | US 5 255 556 A (LOBDELL VINCENT G) 26 octobre 1993 (1993-10-26) * abrégé; figure 4 * * colonne 1, ligne 55 - colonne 3, ligne 19 * | 1,10 | |

**DOMAINES TECHNIQUES RECHERCHES (Int.Cl.7)**

G01N

Le présent rapport a été établi pour toutes les revendications

| Lieu de la recherche | Date d'achèvement de la recherche | Examinateur |
|---|---|---|
| LA HAYE | 20 septembre 2001 | Runser, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 170 580 A1**

**ANNEXE AU RAPPORT DE RECHERCHE EUROPEENNE
RELATIF A LA DEMANDE DE BREVET EUROPEEN NO.**

EP 01 42 0151

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2001

| Document brevet cité au rapport de recherche | | Date de publication | Membre(s) de la famille de brevet(s) | Date de publication |
|---|---|---|---|---|
| GB 632179 | A | 17-11-1949 | AUCUN | |
| DE 1133925 | B | | AUCUN | |
| US 3657920 | A | 25-04-1972 | AUCUN | |
| US 5255556 | A | 26-10-1993 | AUCUN | |

EPO FORM P0460

Pour tout renseignement concernant cette annexe : voir Journal Officiel de l'Office européen des brevets, No.12/82

7